# EUROPÄISCHE PATENTSCHRIFT

(11) **EP 3 523 819 B1**
(45) Veröffentlichungstag und Bekanntmachung des Hinweises auf die Patenterteilung: **19.02.2025**
(21) Anmeldenummer: 17793822.2
(22) Anmeldetag: 05.10.2017
(51) Int. Cl.: H01J 49/04, G01N 1/04, G01N 1/38

(54) **VORRICHTUNG UND VERFAHREN ZUR ANALYSE EINES FESTSTOFF-PROBENMATERIALS**
APPARATUS AND METHOD FOR ANALYSING A SOLID SPECIMEN MATERIAL
DISPOSITIF ET PROCÉDÉ D'ANALYSE D'UN ÉCHANTILLON DE MATÉRIAU SOLIDE

(30) Priorität: 05.10.2016 AT 509002016
(43) Veröffentlichungstag der Anmeldung: 14.08.2019
(73) Patentinhaber: Technische Universität Wien, 1040 Wien (AT)
(72) Erfinder: LIMBECK, Andreas, 1220 Wien (AT); BONTA, Maximilian, 1090 Wien (AT); FRANK, Johannes, 3400 Klosterneuburg (AT)
(74) Vertreter: SONN Patentanwälte GmbH & Co KG
(86) Internationale Anmeldenummer: PCT/AT2017/060251
(87) Internationale Veröffentlichungsnummer: WO 2018/064695

(56) Entgegenhaltungen:
- WO-A1-2016/042165
- DE-A1- 10 320 552
- US-A1- 2011 186 511
- US-A1- 2012 079 894
- POZEBON DIRCE ET AL: "Bioimaging of metals in thin mouse brain section by laser ablation inductively coupled plasma mass spectrometry: novel online quantification strategy using aqueous standards", JOURNAL OF ANALYTICAL ATOMIC SPECTROMETRY, vol. 25, no. 11, 1 January 2010 (2010-01-01), pages 1739, XP093211509, ISSN: 0267-9477, Retrieved from the Internet <URL:https://pubs.rsc.org/en/content/articlepdf/2010/ja/c0ja00055h> [retrieved on 20241003], DOI: 10.1039/c0ja00055h

## Beschreibung

Die Erfindung betrifft eine Vorrichtung zur Analyse eines Feststoff-Probenmaterials mittels Laserablation von Partikeln des Feststoff-Probenmaterials in eine Trägerflüssigkeit nach Anspruch 1.

Weiters betrifft die Erfindung ein Verfahren zur Analyse eines Feststoff-Probenmaterials mittels Laserablation von Partikeln des Feststoff-Probenmaterials in eine Trägerflüssigkeit nach Anspruch 13.

Die WO 2016/042165 A1 offenbart eine Vorrichtung, bei welcher mittels Laserablation ein Aerosol aus einer festen Probe generiert wird.

Die US 2012/0079894 A1 zeigt ein analytisches System zur Laserablation eines Feststoffes, wobei eine Suspension, welche einen Analyten enthält, von einer Ablationszelle mittels eines Trägergases in ein Massenspektrometer geschleust wird.

Um die Elementzusammensetzung von festen Proben mit hoher Genauigkeit bestimmen zu können, ist es im Stand der Technik bekannt, die feste Probe durch einen Säure- oder Schmelzaufschluss aufzulösen. Anschließend kann die Probenlösung mit einem elementanalytischen Verfahren (z.B. Flammen- bzw. ElektroThermische Atomabsorptions-Spektroskopie, ICP-OES, ICP-MS) analysiert werden. Dieses Verfahren ist für solche Materialien geeignet, die sich leicht in Säuren lösen lassen, beispielsweise Metalle und deren Legierungen. Ist die Probe jedoch chemisch inert und mit Säuren schwer bzw. unlöslich, müssen arbeitsaufwändige Verfahren wie Mikrowellenaufschluss oder Hochdruckveraschung in Kombination mit geeigneten Reagenzien (z.B. mit einem Oxidationsmittel) eingesetzt werden, um die Probe in eine gelöste Form zu bringen. Diese Eigenschaft trifft besonders auf keramische Materialien zu, die jedoch insbesondere bei der Herstellung moderner funktionaler Werkstoffe sehr wichtig sind.

Um die mit dem Überführen von Feststoffen in Lösungen verbundenen Schwierigkeiten zu umgehen, kann alternativ auf die direkte Feststoffanalytik zurückgegriffen werden. Hierbei sind eine Vielzahl von Methoden verfügbar, wie zum Beispiel Röntgenfluoreszenz, Analyse mittels Rasterelektronenmikroskop, Funkenspektrometer und Laserablations-ICP-MS (engl. *"inductively coupled plasma mass spectrometry"* für *"Massenspektrometrie mit induktiv gekoppeltem Plasma"*). Substantielle Nachteile sind bei röntgenbasierten Methoden die Einschränkungen bei der Analytik von leichten Elementen und bei abtragenden Verfahren die Matrixabhängigkeit der Signalerzeugung und die damit verbundene Notwendigkeit von Matrix-angepassten Standards. Solche Standards sind nicht für alle Stoffklassen verfügbar, besonders wenn es sich um neu entwickelte Materialien handelt. Zudem ist die Bestimmungsgenauigkeit der meisten Feststoffanalysemethoden nicht ausreichend, um etwa die Stöchiometrie von neuen Materialien mit ausreichender Präzision zu bestimmen.

Eine Kombination aus Feststoff- und Flüssiganalytik bietet LASIL (engl. *"Laser Ablation of a Solid in Liquid"* für *"Laserablation eines Feststoffs in einer Flüssigkeit"*). Hierbei befindet sich die Feststoff-Probe in einer Flüssigkeit, durch welche ein fokussierter und gepulster Laserstrahl gefeuert wird. Der Laserstrahl trifft auf die Probenoberfläche, wodurch Nanopartikel der Probe in der Flüssigkeit dispergiert werden. Dadurch entsteht ein sogenanntes Nanosol.

Die LASIL-Technologie wird einerseits zur Herstellung von Nanopartikeln eingesetzt. Eine solche Anwendung wird beispielsweise in der WO 2010/087869 A1 beschrieben. Hierbei wird eine feste Probe in einem Container mit einer mehrere Millimeter hohen Flüssigkeitsschicht bedeckt. Die Probe wird mit einem Laserstrahl beaufschlagt, um metallische Nanopartikel zu erzeugen. Durch den Container wird ein Flüssigkeitsstrom geleitet, so dass die Nanopartikel abgeführt und gesammelt werden können. Für eine chemische Analyse wäre dieser Aufbau jedoch ungeeignet.

Darüber hinaus wurde LASIL vereinzelt bereits zur chemischen Analyse verwendet. Dabei wurde bisher ein stehender Tropfen auf die Probenoberfläche aufgebracht, bevor ein Laserstrahl durch den stehenden Tropfen geleitet wurde. Nach manuellem Abziehen der Flüssigkeit mittels Pipette wurde das erzeugte Proben-Nanosol dann mittels konventioneller ICP-MS für die Analyse von Flüssigkeiten analysiert. Dieses Verfahren wird beispielsweise in Douglas et alt., "Laser Ablation of a Sample in Liquid - LASIL", J. Anal. At. Spectrom., 2011, 26, 1294 erläutert.

Ein großer Vorteil von LASIL besteht darin, dass keine Matrix-angepassten Standards nötig sind und zur Quantifizierung der erhaltenen Signalintensitäten wässrige Standardlösungen verwendet werden können. Im bisherigen Versuchsaufbau stellt jedoch der manuelle Arbeitsschritt der Probenüberführung in das Messgerät eine große Einschränkung dar. Weitere Nachteile des bekannten Verfahrens sind mögliche Kontaminationen und die Sedimentation der generierten Partikel während der Übertragung der Suspension in das Messgerät.

Aus den US 2012/0079894 A1, DE 10 2006 056 929 A1 und WO 2014/127034 A1 sind andersartige Analysetechniken bekannt.

Die Aufgabe der Erfindung besteht darin, zumindest einzelne Nachteile des Standes der Technik zu lindern bzw. zu beheben. Die Erfindung setzt sich daher zum Ziel, die bekannten "LASIL"-Vorrichtungen bzw. Verfahren dahingehend zu verbessern, dass eine einfachere und präzisere Analyse des Feststoff-Probenmaterials ermöglicht wird.

Diese Aufgabe wird durch eine LASIL-Vorrichtung mit den Merkmalen von Anspruch 1 und ein Verfahren mit den Merkmalen von Anspruch 13 gelöst. Bevorzugte Weiterentwicklungen der Erfindung sind in den abhängigen Ansprüchen angegeben.

Die erfindungsgemäße LASIL-Vorrichtung beinhaltet
- eine Ablationszelle mit dem Probenhalter für das Feststoff-Probenmaterial, mit einem Flüssigkeitskanal für die Trägerflüssigkeit und mit einem Eintrittsfenster aus einem für den Laserstrahl der Laservorrichtung durchlässigen Material,
- eine Zuleitung zum Zuleiten der Trägerflüssigkeit in den Flüssigkeitskanal der Ablationszelle,
- eine Ableitung zum Ableiten der Suspension aus Partikeln des Feststoff-Probenmaterials und der Trägerflüssigkeit von dem Flüssigkeitskanal der Ablationszelle in die Analysevorrichtung, und
- eine Dosiervorrichtung zur Einbringung eines definierten Volumens einer Standardflüssigkeit in die Zuleitung zum Erhalt eines Kalibriersignals.

Erfindungsgemäß ist der Flüssigkeitskanal der Ablationszelle auf der einen Seite mit der Zuleitung und auf der anderen Seite mit der Ableitung für die Trägerflüssigkeit verbunden. Demnach ist die Ablationszelle als Durchflusszelle ausgebildet, welche kontinuierlich von der Trägerflüssigkeit durchströmbar ist. Die Zuleitung und die Ableitung können jeweils als Schlauch oder Rohr ausgeführt sein. Die Trägerflüssigkeit wird über die Zuleitung in den Flüssigkeitskanal der Ablationszelle gefördert und kann nach dem Durchströmen des Flüssigkeitskanals über die Ableitung der Analysevorrichtung zugeführt werden. Vorzugsweise ist die Ableitung direkt mit einem Eingang der Analysevorrichtung verbunden. Die Ablations- bzw. Auswaschzelle weist zudem ein Laserstrahl-Eintrittsfenster aus einem für den Laserstrahl der Laservorrichtung durchlässigen Material auf. Der Laserstrahl wird durch das Eintrittsfenster in die Ablationszelle eingekoppelt, wobei der Laserstrahl die von der Zuleitung kommende Trägerflüssigkeit in dem Flüssigkeitskanal durchsetzt und auf die Oberfläche des Feststoff-Probenmaterials trifft. Dadurch werden Partikel, insbesondere Nanopartikel, aus der Oberfläche des Feststoff-Probenmaterials herausgelöst, so dass eine Suspension aus Partikeln des Feststoff-Probenmaterials und der Trägerflüssigkeit, insbesondere in Form eines Nanosols, entsteht.

Die Suspension wird danach über die Ableitung der Analysevorrichtung zugeführt, in welcher insbesondere die chemische Zusammensetzung des Feststoff-Probenmaterials ermittelt wird. Die erfindungsgemäße Ausführung bringt einerseits den Vorteil mit sich, dass die beim Stand der Technik erforderliche manuelle Übertragung des Tropfens mit den Nanopartikeln zum Messgerät entfällt. Dadurch wird eine mögliche Kontaminationsquelle eliminiert. Zudem wird der Zeit- und Arbeitsaufwand pro Messung verringert. Somit kann die Vorrichtung für Routineuntersuchungen eingesetzt werden. Weiters ist von Vorteil, dass der Flüssigkeitskanal auf der vom Probenhalter abgewandten Seite durch das Eintrittsfenster abgeschlossen wird. Dadurch kann erreicht werden, dass die vom Laserstrahl erzeugten Partikel des Feststoff-Probenmaterials im Wesentlichen vollständig über die Ableitung der Ablationszelle ausgetragen und der Analysevorrichtung zugeführt werden können. Auf diese Weise wird insbesondere eine quantitative Analyse des Feststoff-Probenmaterials in der Analysevorrichtung ermöglicht.

Um eine quantitative Analyse des Feststoff-Probenmaterials zu ermöglichen, ist eine Dosiervorrichtung, insbesondere mit einer Dosierschleife, zur Einbringung eines definierten Volumens einer Standardflüssigkeit in die Zuleitung vorgesehen. Die Standardflüssigkeit enthält denselben Analyt wie das zu analysierende Feststoff-Probenmaterial. In einer eigenen Messung kann die Standardflüssigkeit mit Hilfe der Dosiervorrichtung in die Zuleitung eingebracht, durch die Ablationszelle geführt und in der Analysevorrichtung analysiert werden. Dadurch wird ein Kalibriersignal erhalten, mit welchem das Messsignal für die durch Laserablation erhaltenen Partikel des Feststoff-Probenmaterials kalibriert werden kann. Vorteilhafterweise können so quantitative und stöchiometrische Untersuchungen des Feststoff-Probenmaterials durchgeführt werden.

Für die Zwecke dieser Offenbarung beziehen sich die Orts- und Richtungsangaben, wie "oben", "unten", "vertikal", "horizontal" etc., auf den bestimmungsgemäßen Betriebszustand der LASIL-Vorrichtung.

Als Trägerflüssigkeit kann bevorzugt Wasser oder ein bei Raumtemperatur flüssiger Stoff, insbesondere ein organisches Lösungsmittel, beispielsweise Acetonitril oder Ethanol, oder eine Mischung daraus vorgesehen sein. Bevorzugt sind der Trägerflüssigkeit auch gelöste Zusatzstoffe beigefügt, wie etwa Metallsalze.

Gemäß einer besonders bevorzugten Ausführung weist die Ablationszelle einerseits ein Gehäuse mit dem Flüssigkeitskanal und dem Eintrittsfenster und andererseits den Probenhalter mit dem Feststoff-Probenmaterial auf, wobei das Gehäuse im Betriebszustand auf das Feststoff-Probenmaterial aufgesetzt ist. Demnach weist die Ablationszelle bei dieser Ausführung zwei miteinander verbindbare und voneinander trennbare Einheiten auf, wobei die eine Einheit der Ablationszelle durch das Gehäuse mit dem Flüssigkeitskanal und dem Eintrittsfenster und die andere Einheit durch den Probenhalter mit dem Feststoff-Probenmaterial gebildet ist. Zur Vorbereitung der Analyse wird das Gehäuse vom Benutzer auf das Feststoffmaterial aufgesetzt, wobei der Flüssigkeitskanal zwischen der Oberseite des Feststoff-Probenmaterials und der Unterseite des Gehäuses gebildet wird. Nach der Analyse kann das Gehäuse wieder von der Feststoff-Probe entfernt werden.

Diese Ausführung ist aus mehreren Gründen besonders vorteilhaft. Zum einen kann das Gehäuse auf unterschiedliche, insbesondere flache, Proben aufgesetzt, insbesondere aufgepresst, werden, um den Flüssigkeitskanal für die Ablation zu bilden. Dadurch ergibt sich eine besondere Flexibilität bei der Analyse, da sehr verschiedenartige Proben analysiert werden können. Zum anderen kann ein verbessertes Auswaschverhalten erreicht werden. Es ist möglich, den effektiven mit Flüssigkeit durchströmten Bereich zu minimieren, da nicht die gesamte Probe von der Flüssigkeit überspült werden muss, sondern lediglich ein Abschnitt der Probe benachbart des Flüssigkeitskanals.

Zur Ausbildung des Flüssigkeitskanals an der Unterseite des Gehäuses beim Zusammensetzen der Ablationszelle weist das Gehäuse bevorzugt einen Abschnitt der Zuleitung und/oder einen Abschnitt der Ableitung auf, wobei der Abschnitt der Zuleitung und/oder der Abschnitt der Ableitung jeweils mit dem im Betriebszustand an der dem Feststoff-Probenmaterial zugewandten Unterseite des Gehäuses gebildeten Flüssigkeitskanal verbunden sind. Demnach mündet der Abschnitt der Zuleitung (bzw. entsprechend der Abschnitt der Ableitung) jeweils in eine Öffnung an der Unterseite des Gehäuses, so dass in dem auf das Feststoff-Probenmaterial aufgesetzten Zustand des Gehäuses der Flüssigkeitskanal zwischen der Oberseite des Feststoff-Probenmaterials und der Unterseite des Gehäuses ausgebildet ist.

Um eine zuverlässige Analyse zu ermöglichen, ist bevorzugt eine lösbare Verbindung, insbesondere eine Klemm- oder Schraubverbindung, vorgesehen, um das Gehäuse im Betriebszustand auf dem Feststoff-Probenmaterial zu halten. Bevorzugt ist die lösbare Verbindung darauf ausgelegt, dass das Gehäuse im Betriebszustand gegen die Oberseite des Feststoff-Probenmaterials gepresst wird.

Um eine Abdichtung des Flüssigkeitskanals im Betriebszustand zu gewährleisten, ist bei einer bevorzugten Ausführungsform das Gehäuse an der dem Feststoff-Probenmaterial zugewandten Unterseite mit einem Dichtelement versehen, welches im Betriebszustand in dichtendem Kontakt mit dem Feststoff-Probenmaterial steht. Im voneinander gelösten Zustand ist das Gehäuse nach unten offen. Im auf die Feststoff-Probe aufgesetzten Zustand ist der Flüssigkeitskanal zwischen der Unterseite des Gehäuses, dem Dichtelement und der Oberseite des Feststoff-Probenmaterials ausgebildet.

Zur Ausbildung des Flüssigkeitskanals im Betriebszustand entspricht die Höhe des Flüssigkeitskanals bevorzugt im Wesentlichen der Dicke des Dichtelements entspricht. Die Höhe bzw. Dicke bemisst sich dabei in Richtung senkrecht zur Strömungsrichtung der Flüssigkeit in dem Flüssigkeitskanal.

Bei einer alternativen Ausführungsform weist der Probenhalter für die Feststoff-Probe jeweils einen Abschnitt der Zu- und der Ableitung auf. Bei dieser Ausführungsform weist der Probenhalter eine Kammer zum Einlegen der Feststoff-Probe auf. Im Betriebszustand ist die Kammer oberseitig durch das Eintrittsfenster abgeschlossen.

Bei einer weiteren bevorzugten Ausführungsform weist die Zuleitung einen im Wesentlichen senkrecht zur Hauptebene des Eintrittsfensters verlaufenden Endabschnitt und die Ableitung einen im Wesentlichen senkrecht zur Hauptebene des Eintrittsfensters verlaufenden Endabschnitt auf, wobei der Endabschnitt der Zuleitung mit dem einen Ende des Flüssigkeitskanals in der Ablationszelle und der Endabschnitt der Ableitung mit dem anderen Ende des Flüssigkeitskanals in der Ablationszelle in flüssigkeitsleitender Verbindung steht. Diese Ausführungsform ist konstruktiv besonders einfach.

Gemäß einer besonders bevorzugten Ausführungsform weist der Flüssigkeitskanal zwischen dem Probenhalter und dem Eintrittsfenster eine im Wesentlichen konstante Höhe von 10 µm bis 1 mm, insbesondere von 50 µm bis 200 pm, auf. In diesem Bereich der Höhe des Flüssigkeitskanals kann insbesondere eine für den Abtransport der Partikel ausreichende Fließgeschwindigkeit gewährleistet werden, während die auf die Probenoberfläche auftreffende Laserleistung nur in geeignetem Umfang abgeschwächt wird.

Um eine kontinuierliche Analyse des Feststoff-Probenmaterials zu ermöglichen, ist die Zuleitung für die Trägerflüssigkeit bei einer besonders bevorzugten Ausführungsform mit einer Pumpvorrichtung verbunden, welche Pumpvorrichtung bevorzugt dazu eingerichtet ist, einen im Wesentlichen konstanten Volumenstrom der Trägerflüssigkeit durch den Flüssigkeitskanal der Ablationszelle vorzusehen.

Um eine quantitative Analyse des Feststoff-Probenmaterials zu ermöglichen, ist es vorgesehen, dass eine Dosiervorrichtung, vorzugsweise mit einer Dosierschleife, zur Einbringung eines definierten Volumens einer Standardflüssigkeit in die Zuleitung vorgesehen ist. Die Standardflüssigkeit enthält denselben Analyt wie das zu analysierende Feststoff-Probenmaterial. In einer eigenen Messung kann die Standardflüssigkeit mit Hilfe der Dosiervorrichtung in die Zuleitung eingebracht, durch die Ablationszelle geführt und in der Analysevorrichtung analysiert werden. Dadurch wird ein Kalibriersignal erhalten, mit welchem das Messsignal für die durch Laserablation erhaltenen Partikel des Feststoff-Probenmaterials kalibriert werden kann. Vorteilhafterweise können so quantitative und stöchiometrische Untersuchungen des Feststoff-Probenmaterials durchgeführt werden.

Hinsichtlich einer zuverlässigen, konstruktiv einfachen Ausführung weist die Dosiervorrichtung bevorzugt ein Mehr-Wege-Ventil, insbesondere ein 6-Wege-Ventil, auf. Wie im Stand der Technik an sich bekannt, weist das 6-Wege-Ventil zwei Schaltzustände auf. Im einen Schaltzustand wird eine vorgegebene Menge der Standardflüssigkeit in die Dosierschleife aufgegeben. Im anderen Schaltzustand wird die in der Dosierschleife vorgehaltene Menge der Standardflüssigkeit in die Zuleitung für die Ablationszelle gefördert. Ein Beispiel für ein solches 6-Wege-Ventil wird in der US 2011/186511 A1 beschrieben. Alternativ kann die Dosiervorrichtung ein 8-Wege-Ventil oder ein 10-Wege-Ventil aufweisen.

Um eine ortsaufgelöste Analyse des Feststoff-Probenmaterials zu ermöglichen, ist bevorzugt eine Vorrichtung zur Erzeugung einer Relativbewegung zwischen der Ablationszelle und der Laservorrichtung in Längsrichtung (x) und/oder in Querrichtung (y) des Probenhalters und/oder in Höhenrichtung (z) im Wesentlichen senkrecht zur Längs- (x) und Querrichtung (y) vorgesehen. Je nach Ausführung kann einerseits eine qualitative, vorzugsweise zudem quantitative, Analyse des Feststoff-Probenmaterials entlang der Hauptebene des Feststoff-Probenmaterials, also in x- und/oder in y-Richtung, durchgeführt werden. Vorteilhafterweise kann so eine örtliche Auflösung des Messsignals der Analysevorrichtung erzielt werden. Beispielsweise kann die Zusammensetzung des Feststoff-Probenmaterials in Abhängigkeit von der x- und/oder y-Position in der Hauptebene des Feststoff-Probenmaterials untersucht werden.

In einer bevorzugten Ausführungsvariante weist die Vorrichtung eine in x-, und/oder y-, und/oder z-Richtung bewegliche Bühne zur Halterung der Ablationszelle auf. Bei dieser Ausführungsvariante kann die Laservorrichtung stationär angeordnet sein.

Zur Elementanalyse der Feststoff-Probe ist es günstig, wenn die Analysevorrichtung ein optisches Emissionsspektrometer oder ein Massenspektrometer, insbesondere jeweils mit einer Anregungs- und/oder Ionisierungsquelle, aufweist. Als Anregungs- und/oder Ionisierungsquelle kann insbesondere ein ICP-Modul vorgesehen sein.

Das zugehörige Verfahren enthält die Schritte:
- Zuführen der Trägerflüssigkeit in einen Flüssigkeitskanal einer Ablationszelle über eine Zuleitung;
- Fördern der Trägerflüssigkeit durch den Flüssigkeitskanal der Ablationszelle, wobei die Partikel des Feststoff-Probenmaterials durch das Bestrahlen mit dem Laserstrahl in die Trägerflüssigkeit abgetragen werden;
- Ableiten der Suspension aus Partikeln des Feststoff-Probenmaterials und der Trägerflüssigkeit von dem Flüssigkeitskanal der Ablationszelle, wobei
- die Messsignale der Analysevorrichtung mit Hilfe einer Standardflüssigkeit quantifiziert werden, welche zur Kalibrierung über eine Dosiervorrichtung in die Zuleitung für die Trägerflüssigkeit eingebracht wird.

Die Partikel des Feststoff-Probenmaterials können sodann insbesondere hinsichtlich ihrer Elementzusammensetzung analysiert werden.

In einer bevorzugten Ausführungsform werden für eine ortsauflösende Analyse des Feststoff-Probenmaterials zudem die folgenden Schritte durchgeführt:
- Bewegen des Feststoff-Probenmaterials relativ zu dem Laserstrahl in Längsrichtung (x) und/oder in Querrichtung (y) des Feststoff-Probenmaterials und/oder in Höhenrichtung (z) des Feststoff-Probenmaterials;
- Analysieren der Partikeln des Feststoff-Probenmaterials in Abhängigkeit von einer x-Position und/oder einer y-Position und/oder einer z-Position des Feststoff-Probenmaterials relativ zu dem Laserstrahl.

Weiters ist es bevorzugt, wenn die folgenden Schritte durchgeführt werden:
- Analysieren eines definierten Volumens einer ein Analyt des Feststoff-Probenmaterials enthaltenden Standardflüssigkeit;
- Kalibrieren eines beim Analysieren der Partikeln des Feststoff-Probenmaterials erhaltenen ersten Messsignals über ein beim Analysieren des definierten Volumens der Standardflüssigkeit erhaltenes zweites Messsignal.

Je nach Zusammensetzung der Feststoff-Probe können mehrere Standardflüssigkeiten, jeweils mit einer vorgegebenen Menge zumindest eines Analyten der Feststoff-Probe, analysiert werden. Durch Auswahl der in der Standardlösung enthaltenen chemischen Elemente und/oder deren Gehalte ist eine anwendungsspezifische Anpassung an die jeweilige Fragestellung möglich.

Bei dieser Ausführungsform kann das Verfahren insbesondere den weiteren Schritt:
- Bestimmen eines Verhältnisses zwischen der Menge eines ersten Analyts des Feststoff-Probenmaterials und der Menge eines zweiten Analyts des Feststoff-Probenmaterials aufweisen.

Als zu analysierendes Feststoff-Probenmaterial kann beispielsweise ein Halbleiter, ein Glas- oder Keramikmaterial vorgesehen sein. Zur Analyse des definierten Volumens der Standardflüssigkeit wird bevorzugt eine Dosierschleife verwendet, welche mit einem 6-Wege-Ventil verbunden ist.

Die Erfindung wird nachstehend anhand eines bevorzugten Ausführungsbeispiels, auf das sie jedoch nicht beschränkt sein soll, weiter erläutert.
Fig. 1 zeigt ein Blockschema einer erfindungsgemäßen Vorrichtung zur Analyse einer durch Laserablation erhaltenen Suspension von Partikeln eines Feststoff-Probenmaterials und einer Trägerflüssigkeit;
Fig. 2 zeigt eine schaubildliche Ansicht einer Ablationszelle der Vorrichtung gemäß Fig. 1, wobei die Ablationszelle mit einer Zuleitung und einer Ableitung für die Trägerflüssigkeit verbunden ist;
Fig. 3 zeigt eine schematische Seitenansicht der Ablationszelle gemäß Fig. 2;
Fig. 4 zeigt eine Detailansicht des in Fig. 3 eingerahmten Ausschnitts der Ablationszelle;
Fig. 5 zeigt in einem Diagramm den Signal-Zeit Verlauf jeweils einer Sr- sowie einer Ti-Emissionslinie in einer Analysevorrichtung der Vorrichtung gemäß Fig. 1;
Fig. 6 zeigt eine alternative Ausführungsform der LASIL-Vorrichtung 1.

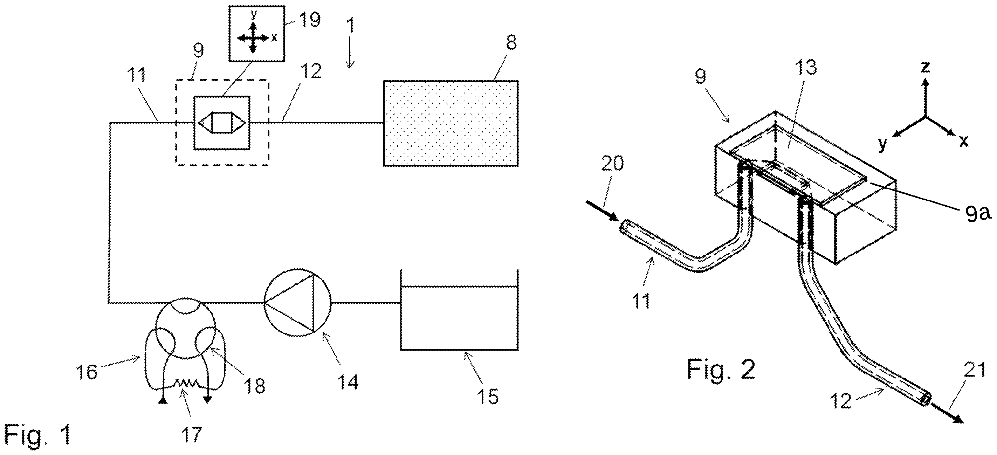

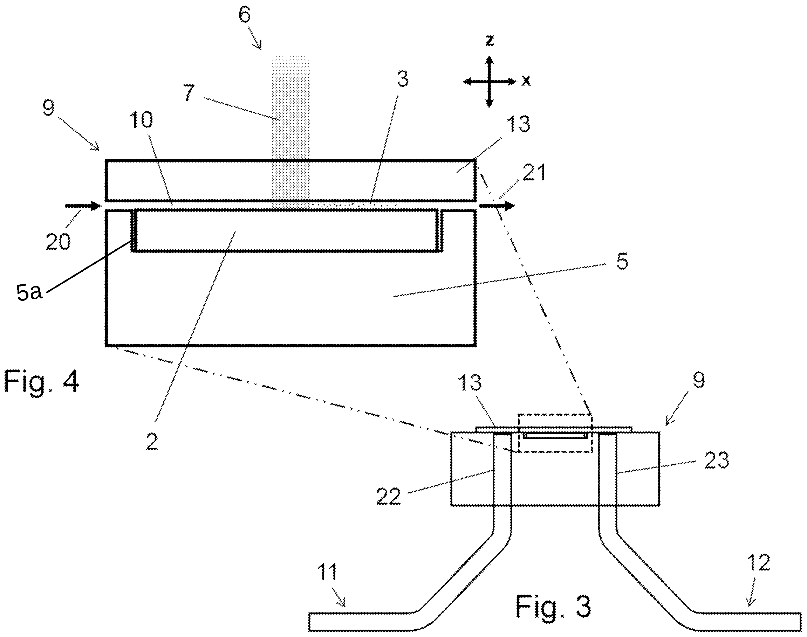

Fig. 1 zeigt eine Vorrichtung 1 zur Analyse eines Feststoff-Probenmaterials 2 (vgl. Fig. 4) durch Laserablation von Partikeln 3 des Feststoff-Probenmaterials 2 in eine Trägerflüssigkeit. Die Vorrichtung 1 weist einen Probenhalter 5 (vgl. Fig. 4) zur Anordnung des mit der Trägerflüssigkeit bedeckten Feststoff-Probenmaterials 2 auf. Weiters ist eine (nur schematisch angedeutete) Laservorrichtung 6 zum Aussenden eines fokussierten und gepulsten Laserstrahls 7 vorgesehen. Der Laserstrahl 7 bewirkt die Ablösung von Partikeln 3 aus der Oberfläche des Feststoff-Probenmaterials 2, wodurch eine Suspension aus Partikeln 3 des Feststoff-Probenmaterials 2 und der Trägerflüssigkeit erzeugt wird. Die LASIL-Vorrichtung 1 weist zudem eine Analysevorrichtung 8 zur Analyse der Suspension aus Partikeln 3 des Feststoff-Probenmaterials 2 und der Trägerflüssigkeit auf. Die Analysevorrichtung 8 kann ein optisches Emissionsspektrometer mit einer Ionisierungsquelle, insbesondere in Form einer sogenannten ICP-OES (engl. "inductively coupled plasma optical emission spectrometry", für "optische Emissionsspektrometrie mittels induktiv gekoppelten Plasmas") aufweisen. Alternativ kann eine sogenannte ICP-MS (engl. "inductively coupled plasma mass spectrometry" für "Massenspektrometrie mit induktiv gekoppeltem Plasma") verwendet werden.

In der gezeigten Ausführung wird die Auslösung der Partikel 3 des Feststoff-Probenmaterials 2 in einer Ablations- bzw. Auswaschzelle 9 durchgeführt, in welcher der Probenhalter 5 für das Feststoff-Probenmaterial 2 aufgenommen ist. Die Ablationszelle 9 weist zudem einen im Querschnitt geschlossenen Flüssigkeitskanal 10 auf, durch den die Trägerflüssigkeit gefördert wird. Weiters ist eine Zuleitung 11 zur Zuführung der Trägerflüssigkeit in den Flüssigkeitskanal 10 der Ablationszelle 9 (vgl. Pfeil 20 in Fig. 2, 4) und eine Ableitung 12 zur Ableitung der Suspension aus Partikeln 3 des Feststoff-Probenmaterials 2 und der Trägerflüssigkeit von dem Flüssigkeitskanal 10 der Ablationszelle 9 in die Analysevorrichtung 8 (vgl. Pfeil 21 in Fig. 2, 4) vorgesehen.

Wie aus Fig. 2 bis 4 ersichtlich, weist die Ablationszelle 9 ein Eintrittsfenster 13 aus einem für den Laserstrahl 7 der Laservorrichtung 6 durchlässigen (Feststoff-)Material, beispielsweise CaF₂, Quarzglas oder Borosilikatglas, auf. Bei der Ausführungsform der Fig. 2 bis 4 ist das Eintrittsfenster 13 über eine lösbare Verbindung an dem Probenhalter 5 der Ablationszelle 9 gehalten, um einen Austausch des Feststoff-Probenmaterials 2 unterhalb des Eintrittsfensters 13 zu ermöglichen. Weiters ist bei dieser Ausführungsform der Flüssigkeitskanal 10 innerhalb des Probenhalters 5 ausgebildet.

Demnach passiert der Laserstrahl 7 das Eintrittsfenster 13, durchdringt die Trägerflüssigkeit und trifft auf die Oberfläche des Feststoff-Probenmaterials 2, wodurch Partikel 3 des Feststoff-Probenmaterials 2 ausgelöst werden. Der Flüssigkeitskanal 10 zwischen dem Probenhalter 5 und dem Eintrittsfenster 13 weist eine (bezogen auf die Transportrichtung der Trägerflüssigkeit entlang der x-Achse) im Wesentlichen konstante Höhe von 10 µm bis 1 mm, insbesondere von 50 µm bis 200 pm, auf. Die Höhe des Flüssigkeitskanals bezieht sich hierbei auf die Erstreckung des Flüssigkeitskanals in z-Richtung, also in Richtung im Wesentlichen senkrecht zur Hauptebene des Probenhalters, welche durch die x- und y-Achse aufgespannt ist.

Die entstehende Suspension bestehend aus der Trägerflüssigkeit und den (Nano-)Partikeln 3 des Feststoff-Probenmaterials 2 wird der Analysevorrichtung 8 zugeführt, in welcher qualitative oder quantitative Untersuchungen der Partikel 3 vorgenommen werden.

Wie aus Fig. 1 weiters ersichtlich, ist die Zuleitung 11 für die Trägerflüssigkeit mit einer Pumpvorrichtung 14 verbunden, mit welcher Trägerflüssigkeit aus einem Flüssigkeitsreservoir 15 in die Zuleitung 11 für die Ablationszelle 9 gepumpt wird. Die Pumpvorrichtung 14 bewirkt einen im Wesentlichen konstanten Volumenstrom der Trägerflüssigkeit durch den Flüssigkeitskanal 10 der Ablationszelle 9, welcher auf die Kapazität der Analysevorrichtung 8 abgestimmt ist.

Wie aus Fig. 1 weiters ersichtlich, ist zudem eine Dosiervorrichtung 16 mit einer Dosierschleife 17 zur Einbringung eines definierten Volumens einer Standardflüssigkeit in die Zuleitung 11 vorgesehen. Die Dosiervorrichtung 16 weist in der gezeigten Ausführung ein 6-Wege-Ventil 18 auf.

Wie aus Fig. 1 weiters ersichtlich, ist in der gezeigten Ausführung eine Vorrichtung 19 zur Erzeugung einer Relativbewegung zwischen der Ablationszelle 9 und der Laservorrichtung 6 in Längsrichtung x, in die dazu senkrecht verlaufende Querrichtung y des Probenhalters 5 und in Höhenrichtung z senkrecht zur Längs- x und Querrichtung y vorgesehen.

In Fig. 3, 4 ist die Ablationszelle 9 dargestellt. Demnach wird die Trägerflüssigkeit von der Zuleitung 11 kommend durch den im Wesentlichen horizontalen Flüssigkeitskanal 10 gefördert. Währenddessen wird die Oberfläche des Feststoff-Probenmaterials 2 mit dem Laserstrahl 7 bestrahlt, wodurch Partikel 3 des Feststoff-Probenmaterials 2 in der Trägerflüssigkeit aufgenommen werden. Die entstehende Suspension wird der Analysevorrichtung 8 zugeführt. Wie aus Fig. 3 ersichtlich, weist die Zuleitung 11 einen im Wesentlichen senkrecht zur Hauptebene des Eintrittsfensters 13 verlaufenden Endabschnitt 22 und die Ableitung 12 einen im Wesentlichen senkrecht zur Hauptebene des Eintrittsfensters 13 verlaufenden Endabschnitt 23 auf. Der Endabschnitt 22 der Zuleitung 11 ist mit dem einen Ende des Flüssigkeitskanals 10 in der Ablationszelle 9 flüssigkeitsleitend verbunden. Entsprechend steht der Endabschnitt 23 der Ableitung 12 mit dem anderen Ende des Flüssigkeitskanals 10 in der Ablationszelle 9 in flüssigkeitsleitender Verbindung.

Mit der zuvor beschriebenen Vorrichtung 1 kann ein Verfahren zur Analyse eines festen Probenmaterials 2 durch Laserablation von Partikeln 3 des Feststoff-Probenmaterials 2 in eine Trägerflüssigkeit durchgeführt werden, welches zumindest die folgenden Schritte aufweist:
- Bereitstellen des Feststoff-Probenmaterials 2 und einer das Feststoff-Probenmaterial 2 bedeckenden Schicht der Trägerflüssigkeit,
- Bestrahlen des Feststoff-Probenmaterials 2 mit einem Laserstrahl 7 derart, dass eine Suspension aus Partikeln 3 des Feststoff-Probenmaterials 2 und der Trägerflüssigkeit erzeugt wird,
- Analyse der Suspension aus Partikeln 3 des Feststoff-Probenmaterials 2 und der Trägerflüssigkeit,
- Zuführen der Trägerflüssigkeit in einen Flüssigkeitskanal 10 einer Durchfluss-Ablationszelle 9;
- Fördern der Trägerflüssigkeit durch einen Flüssigkeitskanal 10 einer Ablationszelle 9, wobei die Partikel 3 des Feststoff-Probenmaterials 2 durch Bestrahlen mit dem Laserstrahl 7 in die Trägerflüssigkeit abgetragen werden; und
- Ableiten der Suspension aus Partikeln 3 des Feststoff-Probenmaterials 2 und der Trägerflüssigkeit von dem Flüssigkeitskanal 10 der Ablationszelle 9.

Zur Erzielung einer ortsauflösenden Analyse des Feststoff-Probenmaterials 2 können zudem die Schritte
- Bewegen des Feststoff-Probenmaterials 2 relativ zu dem Laserstrahl in Längsrichtung x und/oder in Querrichtung y des Feststoff-Probenmaterials 2 und/oder in Höhenrichtung z des Feststoff-Probenmaterials 2;
- Analyse der Suspension aus Partikeln 3 des Feststoff-Probenmaterials 2 und der Trägerflüssigkeit in Abhängigkeit von einer x-Position und/oder einer y-Position und/oder einer z-Position des Feststoff-Probenmaterials 2 relativ zu dem Laserstrahl 7
durchgeführt werden.

Demnach wird eine Analysemethode zur Verfügung gestellt, welche die Vorteile von Fest- und Flüssiganalytik kombiniert. Die Probe befindet sich dabei in einer speziell angefertigten Ablations- bzw. Auswaschzelle 9, welche mit einem vorzugsweise im Wesentlichen konstant fließenden Strom von Trägerflüssigkeit, insbesondere Wasser oder eine vorzugsweise verdünnte Säure, durchspült wird.

Die Ablationszelle 9 ist mit einem Eintrittsfenster 13 ausgebildet, welches für die Wellenlänge der Laservorrichtung 6 durchlässig ist. Wird der Laserstrahl 7 durch das Eintrittsfenster 13 hindurch auf die Probenoberfläche gerichtet, entstehen feinste Partikel 3, die im Flüssigkeitsstrom ein Nanosol bilden. Diese Suspension wird aus der Ablationszelle 9 abtransportiert und zu einer Analysevorrichtung 8 in Form eines ICP-OES oder ICP-MS-Geräts geleitet, um ein transientes Analytsignal aufzuzeichnen. Die Messsignale können mit Hilfe wässriger Standards (Standardflüssigkeiten) quantifiziert werden. Die wässrigen Standards können über eine Dosiervorrichtung 16, insbesondere in Form eines Fließinjektionssystems mit Dosierschleife 17, in die Zuleitung 11 für die Trägerflüssigkeit eingebracht werden. Dieser Vorgang ist mit der Vorrichtung 1 automatisierbar, wodurch eine Analyse der Probe ohne manuellen Eingriff ermöglicht wird. Damit können insbesondere schwer aufzulösende Materialien, wie etwa Keramiken, auf einfache Weise analysiert werden. Auch für andere Proben bietet das Verfahren große Vorteile. Die einzige Grundvoraussetzung ist, dass diese Proben in der verwendeten Trägerflüssigkeit unlöslich sein müssen.

### Beispiel

Das Verfahren wurde zur Analyse der Stöchiometrie einer mittels Laser-Abscheidung (PLD - "pulsed-laser-deposition") hergestellten SrTi0₃-Schicht angewandt. Die SrTi0₃-Schicht wurde auf ein Yttriumstabilisiertes Zirkonoxid-Plättchen als Substrat aufgebracht. Die Schichtdicke beträgt etwa 500 nm.

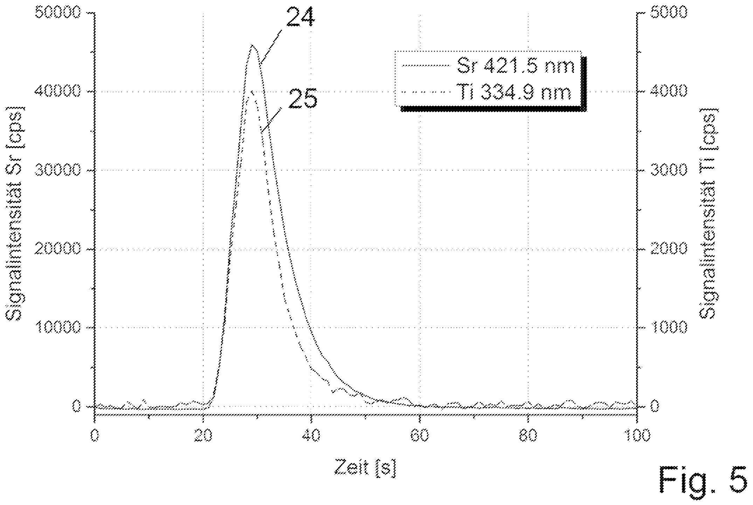

Fig. 5 zeigt den Signal-Zeit Verlauf jeweils einer Sr-Emissionslinie 24 sowie einer Ti-Emissionslinie 25 während einer punktuellen Ablation der Probe mit einem Laserstrahl 7 eines Durchmessers von 200 µm und einer Laserleistung von 1.83 mJ. Zehn Laserpulse wurden auf die Probe abgegeben. Aus Fig. 5 ist die ausreichende Signalintensität für beide interessierenden Analyten sowie ein gutes Auswaschverhalten der Ablationszelle 9 erkennbar. Durch Kalibration mittels der Dosiervorrichtung 16 kann festgestellt werden, dass die gesamte abgetragene und detektierte Menge an Probenmaterial 2 etwa 140 ng beträgt.

Mittels der über die Dosiervorrichtung 16 eingebrachten Standardflüssigkeiten lässt sich auch die relative Zusammensetzung des Probenmaterials 2 bestimmen. Durch Bildung eines Mittelwerts aus sechs Einzelmessungen wurde ein Verhältnis von 1,000 ± 0,017 (Sr) zu 0,988 ± 0,017 (Ti) ermittelt. Die erhaltenen Werte unterscheiden sich nicht signifikant vom Verhältnis 1:1. Daraus kann geschlossen werden, dass eine stöchiometrische Schicht vorliegt. Dieses Beispiel demonstriert eine Anwendung des Online-LASIL-Verfahrens, mit welchem eine wesentliche Zeitersparnis gegenüber der für konventionelle Flüssiganalytik notwendigen Probenvorbereitung erzielt werden kann. Die SrTi03-Schicht könnte nur durch einen aufwändigen Schmelzaufschluss in Lösung gebracht werden. Zusätzlich würde eine Flüssigmessung nicht die Präzision der demonstrierten Messungen übertreffen.

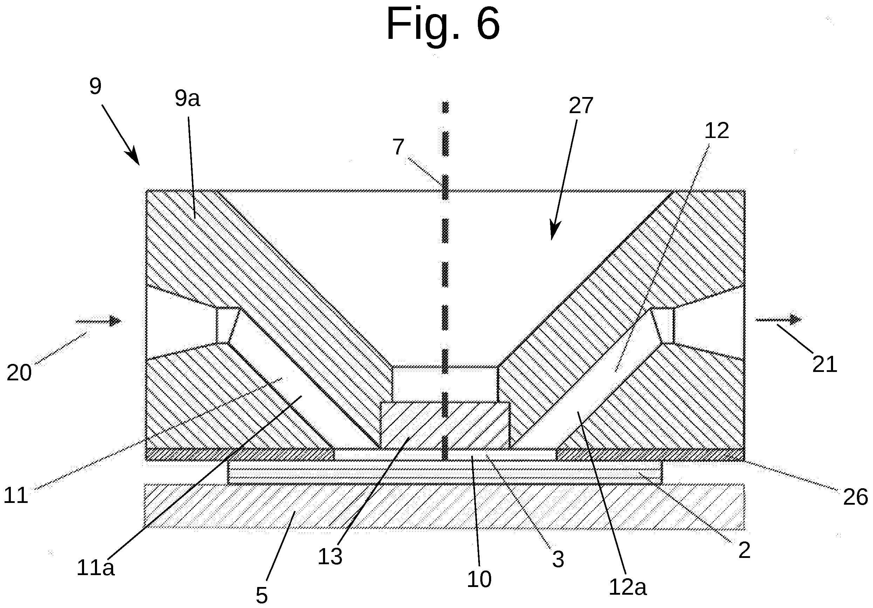

Fig. 6 zeigt eine alternative Ausführungsform der LASIL-Vorrichtung 1, wobei nachstehend lediglich auf die Unterschiede zur Ausführungsform der Fig. 1 bis 5 eingegangen wird.

Bei der Ausführungsform der LASIL-Vorrichtung 1 gemäß Fig. 1 bis 5 ist das Feststoff-Probenmaterial 2 in eine Kammer 5a (vgl. Fig. 4) des Probenhalters 5 eingelegt, welcher zudem den Flüssigkeitskanal 10 enthält. Die Kammer 5a kann insbesondere als wannenförmige Vertiefung an der Oberseite des Probenhalters 5 ausgebildet sein.

Zur Vorbereitung der Messung wird das Feststoff-Probenmaterial 2 bei abgenommenem Eintrittsfenster 13 in der Kammer 5a angeordnet, bevor der Flüssigkeitskanal 10 mit dem Eintrittsfenster 13 verschlossen wird.

Gemäß Fig. 6 weist die Ablationszelle 9 einerseits ein Gehäuse 9a mit dem Flüssigkeitskanal 10 und dem Eintrittsfenster 13 und andererseits den Probenhalter 5 für das Feststoff-Probenmaterial 2 auf. Das Gehäuse 9 mit dem Flüssigkeitskanal 10 und dem Eintrittsfenster 13 und der Probenhalter 5 mit dem Feststoff-Probenmaterial 2 liegen getrennt voneinander vor. Bei dieser Ausführung ist der Probenhalter 5 frei von dem Flüssigkeitskanal 13. Beispielsweise kann der Probenhalter 5 so durch eine insbesondere plattenförmige Unterlage gebildet sein. Bei dieser Ausführungsform bildet somit das Gehäuse 9a die eigentliche Ablationszelle 9, welche im bestimmungsgemäßen Betriebszustand, d.h. während der Ablation, auf das Feststoff-Probenmaterial 2 aufgesetzt ist. Zu diesem Zweck ist das Gehäuse 9a an der dem Feststoff-Probenmaterial 2 zugewandten Unterseite mit einem Dichtelement 26 versehen, welches im Betriebszustand in dichtendem Kontakt mit dem Feststoff-Probenmaterial 2 steht. Bevorzugt ist das Dichtelement 26 aus einem Elastomer, insbesondere Polymethylmethacrylat(PMMA) oder Silikon, gebildet. Weiters kann eine lösbare Verbindung, insbesondere eine Klemm- oder Schraubverbindung, vorgesehen sein, um das Gehäuse 9 im montierten Betriebszustand fest auf dem Feststoff-Probenmaterial 2 zu halten. Das Feststoff-Probenmaterial 2 liegt bevorzugt in einer flachen, insbesondere eine ebene Oberseite aufweisenden Form vor.

Bei dieser Ausführungsform wird gegenüber den Fig. 1 bis 5 eine größere Flexibilität bei der Analyse von verschiedenen Proben erzielt, da die Probe nicht in die Kammer 5a des Probenhalters 5 passen muss. Das Analyseprinzip bleibt dabei unverändert.

Wie aus Fig. 5 ersichtlich, weist das Gehäuse 9a einen Abschnitt 11a der Zuleitung 11 in Strömungsrichtung vor dem Flüssigkeitskanal 10 und einen Abschnitt 12a der Ableitung 12 in Strömungsrichtung nach dem Flüssigkeitskanal 10 auf. Die Zuleitung 11 und die Ableitung 12 münden jeweils in den Flüssigkeitskanal 10, welcher in der gezeigten Ausführung an der Unterseite des Gehäuses 9a gebildet ist. Der Flüssigkeitskanal 10 ist in der gezeigten Ausführungsform durch die Unterseite des Gehäuses 9a, das Dichtelement 26 und die Oberfläche des Feststoff-Probenmaterials 2 begrenzt. Wie zuvor beschrieben, wird der Flüssigkeitskanal 10 durch einen Flüssigkeitsstrom aus der Zuleitung 11 durchströmt. Dabei wird auf der Probenoberfläche ein Flüssigkeitsfilm 3 erzeugt. Die Höhe des Flüssigkeitsfilms entspricht in der gezeigten Ausführung im Wesentlichen der Dicke des Dichtelements 26, welches sich im Betriebszustand zwischen dem Gehäuse 9a und der Probenoberfläche befindet. Bevorzugt weist das Dichtelement eine Dicke von 10 µm bis 1 mm, insbesondere von 50 µm bis 200 pm, auf. Das Dichtelement 26 erstreckt sich vorzugsweise im Wesentlichen über die gesamte Unterseite des Gehäuses 9a, jedoch mit einer Aussparung entsprechend dem Flüssigkeitskanal 10. Oberhalb des Flüssigkeitskanals 10 befindet sich das optische Eintrittsfenster, beispielsweise aus CaF₂ oder Quarzglas, welches für die Wellenlänge des verwendeten Lasers hohe Transparenz aufweist. Beim Auftreffen des Laserstrahls 7 auf die Probenoberfläche kommt es (wie zuvor in Zusammenhang mit Fig. 1 bis 5 geschildert) zu einer Bildung von Nanopartikeln aus dem Probenmaterial, welche vom Flüssigkeitsstrom in Richtung des Ablaufs 12 abtransportiert werden.

Das Gehäuse 9a ist bevorzugt aus einem Kunststoff gebildet, so dass insbesondere keine metallischen Verunreinigungen in die zu analysierende Flüssigkeit abgegeben werden. Bevorzugte Kunststoffe sind chemisch inert, es kommen hier etwa Polyoxymethylen (POM) oder Polytetrafluorethylen (PTFE) in Frage.

Gemäß Fig. 6 weist das Gehäuse 9 eine Aussparung 27 auf, welche in der gezeigten Ausführungsvariante abschnittsweise nach unten hin trichterförmig zusammenläuft. An der Unterseite der Aussparung ist das Eintrittsfenster 13 angeordnet, welches den Flüssigkeitskanal 10 nach oben hin abschließt.

Die Ausführungsform der Fig. 6 zeichnet sich durch ihre besonders hohe Flexibilität und Nutzerfreundlichkeit aus. Vorteilhafterweise kann ein besonders günstiges Auswaschverhalten erreicht werden. Es ist möglich, den effektiven mit Flüssigkeit durchströmten Bereich zu minimieren, da nicht mehr die gesamte Probe von der Flüssigkeit überspült werden muss.

## Patentansprüche

1. Vorrichtung (1) zur Analyse eines Feststoff-Probenmaterials (2) mittels Laserablation von Partikeln (3) des Feststoff-Probenmaterials (2) in eine Trägerflüssigkeit, aufweisend:
- einen Probenhalter (5) zur Anordnung des mit der Trägerflüssigkeit bedeckten Feststoff-Probenmaterials (2),
- eine Laservorrichtung (6) zum Bestrahlen des Feststoff-Probenmaterials (2) mit einem Laserstrahl (7) derart, dass eine Suspension aus Partikeln (3) des Feststoff-Probenmaterials (2) und der Trägerflüssigkeit erzeugt werden kann,
- eine Analysevorrichtung (8) zur Analyse der Partikeln (3) des Feststoff-Probenmaterials (2),
- eine Ablationszelle (9) mit dem Probenhalter (5) für das Feststoff-Probenmaterial (2), mit einem Flüssigkeitskanal (10) für die Trägerflüssigkeit und mit einem Eintrittsfenster (13) aus einem für den Laserstrahl (7) der Laservorrichtung (6) durchlässigen Material,
- eine Zuleitung (11) zum Zuleiten der Trägerflüssigkeit in den Flüssigkeitskanal (10) der Ablationszelle (9) und
- eine Ableitung (12) zum Ableiten der Suspension aus Partikeln (3) des Feststoff-Probenmaterials (2) und der Trägerflüssigkeit von dem Flüssigkeitskanal (10) der Ablationszelle (9) in die Analysevorrichtung (8) **gekennzeichnet durch**
- eine Dosiervorrichtung (16) zur Einbringung eines definierten Volumens einer Standardflüssigkeit in die Zuleitung (11) zum Erhalt eines Kalibriersignals.

2. Vorrichtung (1) nach Anspruch 1, **dadurch gekennzeichnet, dass** die Ablationszelle (9) einerseits ein Gehäuse (9a) mit dem Flüssigkeitskanal (10) und dem Eintrittsfenster (13) und andererseits den Probenhalter (5) mit dem Feststoff-Probenmaterial (2) aufweist, wobei das Gehäuse (9a) im Betriebszustand auf das Feststoff-Probenmaterial (2) aufgesetzt ist.

3. Vorrichtung (1) nach Anspruch 2, **dadurch gekennzeichnet, dass** das Gehäuse (9a) einen Abschnitt (11a) der Zuleitung (11) und/oder einen Abschnitt (12a) der Ableitung (12) aufweist, wobei der Abschnitt (11a) der Zuleitung (11) und/oder der Abschnitt (12ab) der Ableitung (12) jeweils mit dem im Betriebszustand an der dem Feststoff-Probenmaterial (2) zugewandten Unterseite des Gehäuses (9a) gebildeten Flüssigkeitskanal (10) verbunden sind.

4. Vorrichtung (1) nach Anspruch 2 oder 3, **dadurch gekennzeichnet, dass** eine lösbare Verbindung, insbesondere eine Klemm- oder Schraubverbindung, vorgesehen ist, um das Gehäuse (9a) im Betriebszustand auf dem Feststoff-Probenmaterial (2) zu halten.

5. Vorrichtung (1) nach einem der Ansprüche 2 bis 4, **dadurch gekennzeichnet, dass** das Gehäuse (9a) an der dem Feststoff-Probenmaterial (2) zugewandten Unterseite mit einem Dichtelement (26) versehen ist, welches im Betriebszustand in dichtendem Kontakt mit dem Feststoff-Probenmaterial (2) steht.

6. Vorrichtung (1) nach Anspruch 5, **dadurch gekennzeichnet, dass** die Höhe des Flüssigkeitskanals (10) im Wesentlichen der Dicke des Dichtelements (26) entspricht.

7. Vorrichtung (1) nach einem der Ansprüche 1 bis 6, **dadurch gekennzeichnet, dass** der Flüssigkeitskanal (10) zwischen dem Probenhalter (5) und dem Eintrittsfenster (13) eine im Wesentlichen konstante Höhe von 10 µm bis 1 mm, insbesondere von 50 µm bis 200 µm, aufweist.

8. Vorrichtung (1) nach einem der Ansprüche 1 bis 7, **dadurch gekennzeichnet, dass** die Zuleitung (11) für die Trägerflüssigkeit mit einer Pumpvorrichtung (14) verbunden ist, welche Pumpvorrichtung (14) bevorzugt dazu eingerichtet ist, einen im Wesentlichen konstanten Volumenstrom der Trägerflüssigkeit durch den Flüssigkeitskanal (10) der Ablationszelle (9) vorzusehen.

9. Vorrichtung (1) nach einem der Ansprüche 1 bis 8, **dadurch gekennzeichnet, dass** die Dosiervorrichtung (16) eine Dosierschleife (17) zur Einbringung eines definierten Volumens einer Standardflüssigkeit in die Zuleitung (11) aufweist.

10. Vorrichtung (1) nach Anspruch 9, **dadurch gekennzeichnet, dass** die Dosiervorrichtung (16) ein Mehr-Wege-Ventil (18), insbesondere ein 6-Wege-Ventil, aufweist.

11. Vorrichtung (1) nach einem der Ansprüche 1 bis 10, **dadurch gekennzeichnet, dass** eine Vorrichtung (19) zur Erzeugung einer Relativbewegung zwischen der Ablationszelle (9) und der Laservorrichtung (6) in Längsrichtung (x) und/oder in Querrichtung (y) des Probenhalters (5) und/oder in Höhenrichtung (z) im Wesentlichen senkrecht zur Längs- (x) und Querrichtung (y) vorgesehen ist.

12. Vorrichtung (1) nach einem der Ansprüche 1 bis 11, **dadurch gekennzeichnet, dass** die Analysevorrichtung (8) ein optisches Emissionsspektrometer oder ein Massenspektrometer, insbesondere jeweils mit einer Anregungs- und/oder Ionisierungsquelle, aufweist.

13. Verfahren zur Analyse eines Feststoff-Probenmaterials (2) mittels Laserablation von Partikeln (3) des Feststoff-Probenmaterials (2) in eine Trägerflüssigkeit, mit den Schritten:
- Bereitstellen des Feststoff-Probenmaterials (2) und einer das Feststoff-Probenmaterial (2) bedeckenden Schicht der Trägerflüssigkeit,
- Bestrahlen des Feststoff-Probenmaterials (2) mit einem Laserstrahl (7) derart, dass eine Suspension aus Partikeln (3) des Feststoff-Probenmaterials (2) und der Trägerflüssigkeit erzeugt wird,
- Analysieren der Partikeln (3) des Feststoff-Probenmaterials (2) mit Hilfe einer Analysevorrichtung (8),
- Zuführen der Trägerflüssigkeit in einen Flüssigkeitskanal (10) einer Ablationszelle (9) über eine Zuleitung (11);
- Fördern der Trägerflüssigkeit durch den Flüssigkeitskanal (10) der Ablationszelle (9), wobei die Partikel (3) des Feststoff-Probenmaterials (2) durch das Bestrahlen mit dem Laserstrahl (7) in die Trägerflüssigkeit abgetragen werden;
- Ableiten der Suspension aus Partikeln (3) des Feststoff-Probenmaterials (2) und der Trägerflüssigkeit von dem Flüssigkeitskanal (10) der Ablationszelle (9),
**dadurch gekennzeichnet, dass**
- die Messsignale der Analysevorrichtung (8) mit Hilfe einer Standardflüssigkeit quantifiziert werden, welche zur Kalibrierung über eine Dosiervorrichtung (16) in die Zuleitung (11) für die Trägerflüssigkeit eingebracht wird.

14. Verfahren nach Anspruch 13, weiters **gekennzeichnet durch** die Schritte
- Bewegen des Feststoff-Probenmaterials (2) relativ zu dem Laserstrahl (7) in Längsrichtung (x) und/oder in Querrichtung (y) des Feststoff-Probenmaterials (2) und/oder in Höhenrichtung (z) des Feststoff-Probenmaterials (2);
- Analysieren der Partikeln (3) des Feststoff-Probenmaterials (2) in Abhängigkeit von einer x-Position und/oder einer y-Position und/oder einer z-Position des Feststoff-Probenmaterials (2) relativ zu dem Laserstrahl (7).

## Claims

1. A device (1) for analysing a solid sample material (2) by means of laser ablation of particles (3) of the solid sample material (2) in a carrier liquid, comprising:
- a sample holder (5) for positioning the solid sample material (2) covered with the carrier liquid;
- a laser device (6) for irradiating the solid sample material (2) with a laser beam (7) in a manner such that a suspension of particles (3) of the solid sample material (2) and of the carrier liquid can be produced,
- an analytical device (8) for analysing the particles (3) of the solid sample material (2),
- an ablation cell (9) having the sample holder (5) for the solid sample material (2), having a liquid channel (10) for the carrier liquid and having an entry window (13) produced from a material that is transparent to the laser beam (7) of the laser device (6),
- a supply line (11) to supply the carrier liquid to the liquid channel (10) of the ablation cell (9), and
- a discharge line (12) to discharge the suspension of particles (3) of the solid sample material (2) and of the carrier liquid from the liquid channel (10) of the ablation cell (9) to the analytical device (8) **characterized by**
- a dosing device (16) for introducing a defined volume of a standard liquid into the supply line (11) to obtain a calibration signal.

2. The device (1) as claimed in claim 1, **characterized in that** the ablation cell (9) on the one hand comprises a housing (9a) with the liquid channel (10) and the entry window (13) and on the other hand comprises the sample holder (5) with the solid sample material (2), wherein in the operational condition, the housing (9a) is positioned onto the solid sample material (2).

3. The device (1) as claimed in claim 2, **characterized in that** the housing (9a) comprises a section (11a) of the supply line (11) and/or a section (12a) of the discharge line (12), wherein the section (11a) of the supply line (11) and/or the section (12ab) of the discharge line (12) are respectively connected to the liquid channel (10) formed on the underside of the housing (9a) which underside faces the solid sample material (2) in the operational condition.

4. The device (1) as claimed in claim 2 or claim 3, **characterized in that** a releasable connection, in particular a clamp or screw connection, is provided in order to retain the housing (9a) on the solid sample material (2) in the operational condition.

5. The device (1) as claimed in any one of claims 2 to 4, **characterized in that** the housing (9a) is provided with a sealing element (26) on the underside facing the solid sample material (2) which sealing element (26) in the operational condition is in sealing contact with the solid sample material (2).

6. The device (1) as claimed in claim 5, **characterized in that** the height of the liquid channel (10) essentially corresponds to the thickness of the sealing element (26).

7. The device (1) as claimed in any one of claims 1 to 6, **characterized in that** the liquid channel (10) between the sample holder (5) and the entry window (13) comprises an essentially constant height of 10 µm to 1 mm, in particular of 50 µm to 200 µm.

8. The device (1) as claimed in any one of claims 1 to 7, **characterized in that** the supply line (11) for the carrier liquid is connected to a pump device (14), which pump device (14) is preferably configured in a manner such that an essentially constant volumetric flow of the carrier liquid is provided through the liquid channel (10) of the ablation cell (9).

9. The device (1) as claimed in any one of claims 1 to 8, **characterized in that** a dosing device (16) comprises a dosing loop (17) for introducing a defined volume of a standard liquid into the supply line (11).

10. The device (1) as claimed in claim 9, **characterized in that** the dosing device (16) comprises a multi-way valve (18), in particular a 6-way valve.

11. The device (1) as claimed in any one of claims 1 to 10, **characterized in that** a device (19) is provided for producing a relative movement between the ablation cell (9) and the laser device (6) in the longitudinal direction (x) and/or in the transverse direction (y) of the sample holder (5) and/or in the height direction (z) essentially perpendicular to the longitudinal direction (x) and transverse direction (y).

12. The device (1) as claimed in any one of claims 1 to 11, **characterized in that** the analytical device (8) comprises an optical emission spectrometer or a mass spectrometer, in particular respectively with an excitation source and/or ionisation source.

13. A method for analysing a solid sample material (2) by means of laser ablation of particles (3) of the solid sample material (2) in a carrier liquid, with the following steps:
- providing the solid sample material (2) and a layer of the carrier liquid which covers the solid sample material (2),
- irradiating the solid sample material (2) with a laser beam (7) in a manner such that a suspension of particles (3) of the solid sample material (2) and of the carrier liquid is produced,
- analysing the particles (3) of the solid sample material (2) with the aid of an analytical device (8),
- supplying the carrier liquid to a liquid channel (10) of an ablation cell (9) through a supply line (11);
- conveying the carrier liquid through the liquid channel (10) of the ablation cell (9), wherein the particles (3) of the solid sample material (2) are ablated into the carrier liquid by irradiation with the laser beam (7);
- discharging the suspension of particles (3) of the solid sample material (2) and of the carrier liquid from the liquid channel (10) of the ablation cell (9), **characterized in that**
- the measurement signals of the analytical device (8) are quantified with the aid of a standard liquid, which is introduced for calibration through a dosing device (16) into the supply line (11) for the carrier liquid.

14. The method as claimed in claim 13, further **characterized by** the following steps:
- moving the solid sample material (2) relative to the laser beam (7) in the longitudinal direction (x) and/or in the transverse direction (y) of the solid sample material (2) and/or in the height direction (z) of the solid sample material (2);
- analysing the particles (3) of solid sample material (2) as a function of an x-position and/or a y-position and/or a z-position of the solid sample material (2) relative to the laser beam (7).

## Revendications

1. Dispositif (1) pour l'analyse d'un matériau d'échantillon de matière solide (2) par ablation au laser de particules (3) du matériau d'échantillon de matière solide (2) dans un liquide porteur, comprenant :
- un support d'échantillon (5) pour la disposition du matériau d'échantillon de matière solide (2) recouvert par le liquide porteur,
- un dispositif laser (6) pour l'irradiation du matériau d'échantillon de matière solide (2) avec un rayon laser (7) de sorte qu'une suspension de particules (3) du matériau d'échantillon de matière solide (2) et du liquide porteur peut être créé,
- un dispositif d'analyse (8) pour l'analyse des particules (3) du matériau d'échantillon de matière solide (2),
- une cellule d'ablation (9) avec le support d'échantillon (5) pour le matériau d'échantillon de matière solide (2), avec un canal de liquide (10) pour le liquide porteur et avec une fenêtre d'entrée (13) en matériau transparent pour le rayon laser (7) du dispositif laser (6),
- une conduite d'alimentation (11) pour l'introduction du liquide porteur dans le canal de liquide (10) de la cellule d'ablation (9) et
- une conduite d'évacuation (12) pour l'évacuation de la suspension de particules (3) du matériau d'échantillon de matière solide (2) et du liquide porteur hors du cala de liquide (10) de la cellule d'ablation (9) vers le dispositif d'analyse (8),
**caractérisé par**
- un dispositif de dosage (16) pour l'introduction d'un volume défini d'un liquide standard dans la conduite d'alimentation (11) afin d'obtenir un signal d'étalonnage.

2. Dispositif (1) selon la revendication 1, **caractérisé en ce que** la cellule d'ablation (9) comprend d'une part un boîtier (9a) avec le canal de liquide (10) et la fenêtre d'entrée (13) et d'autre part le support d'échantillon (5) avec le matériau d'échantillon de matière solide (2), dans lequel le boîtier (9a) est posé, dans l'état de fonctionnement, sur le matériau d'échantillon de matière solide (2).

3. Dispositif (1) selon la revendication 2, **caractérisé en ce que** le boîtier (9a) comprend une portion (11a) de la conduite d'alimentation (11) et/ou une portion (12a) de la conduite d'évacuation (12), dans lequel la portion (11a) de la conduite d'alimentation (11) et/ou la portion (12ab) de la conduite d'évacuation (12) sont reliées chacune avec le canal de liquide (10) formé avec la face inférieure du boîtier (9a), orientée vers le matériau d'échantillon de matière solide (2) dans l'état de fonctionnement.

4. Dispositif (1) selon la revendication 2 ou 3, **caractérisé en ce qu'**une liaison amovible, plus particulièrement une liaison par serrage ou vissée, est prévue, afin de maintenir le boîtier (9a) dans l'état de fonctionnement sur le matériau d'échantillon de matière solide (2).

5. Dispositif (1) selon l'une des revendications 2 à 4, **caractérisé en ce que** le boîtier (9a) est muni, au niveau de la face inférieure orientée vers le matériau d'échantillon de matière solide (2), d'un élément d'étanchéité (26) qui, dans l'état de fonctionnement, est en contact étanche avec le matériau d'échantillon de matière solide (2).

6. Dispositif (1) selon la revendication 5, **caractérisé en ce que** la hauteur du canal de liquide (10) correspond globalement à l'épaisseur de l'élément d'étanchéité (26).

7. Dispositif (1) selon l'une des revendications 1 à 6, **caractérisé en ce que** le canal de liquide (10) présente, entre le support d'échantillon (5) et la fenêtre d'entrée (13), une hauteur globalement constante de 10 µm à 1 mm, plus particulièrement de 50 µm à 200 µm.

8. Dispositif (1) selon l'une des revendications 1 à 7, **caractérisé en ce que** la conduite d'alimentation (11) pour le liquide porteur est reliée avec un dispositif de pompage (14), ce dispositif de pompage (14) étant de préférence conçu pour générer un flux volumique globalement constant du liquide porteur à travers le canal de liquide (10) de la cellule d'ablation (9).

9. Dispositif (1) selon l'une des revendications 1 à 8, **caractérisé en ce que** le dispositif de dosage (16) comprend une boucle de dosage (17) pour l'introduction d'un volume défini d'un liquide standard dans la conduite d'alimentation (11).

10. Dispositif (1) selon la revendication 9, **caractérisé en ce que** le dispositif de dosage (16) comprend une vanne multi-voie (18), plus particulièrement une vanne six voies.

11. Dispositif (1) selon l'une des revendications 1 à 10, **caractérisé en ce qu'**un dispositif (19) pour la réalisation d'un mouvement relatif entre la cellule d'ablation (9) et le dispositif laser (6) dans la direction longitudinale (x) et/ou dans la direction transversale (y) du support d'échantillon (5) et/ou dans la direction de la hauteur (z) globalement perpendiculaire aux directions longitudinale (x) et transversale (y).

12. Dispositif (1) selon l'une des revendications 1 à 11, **caractérisé en ce que** le dispositif d'analyse (8) comprend un spectromètre à émission optique ou un spectromètre de masse, plus particulièrement respectivement avec une source d'excitation et/ou d'ionisation.

13. Procédé d'analyse d'un matériau d'échantillon de matière solide (2) par ablation laser de particules (3) du matériau d'échantillon de matière solide (2) dans un liquide porteur, avec les étapes suivantes :
- mise à disposition du matériau d'échantillon de matière solide (2) et d'une couche de liquide porteur recouvrant le matériau d'échantillon de matière solide (2),
- irradiation du matériau d'échantillon de matière solide (2) avec un rayon laser (7) de sorte qu'une suspension de particules (3) du matériau d'échantillon de matière solide (2) et de liquide porteur est créée,
- analyse des particules (3) du matériau d'échantillon de matière solide (2) à l'aide d'un dispositif d'analyse (8),
- introduction du liquide porteur dans un canal de liquide (10) d'une cellule d'ablation (9) par l'intermédiaire d'une conduite d'alimentation (11) ;
- transport du liquide porteur à travers le canal de liquide (10) de la cellule d'ablation (9), dans lequel les particules (3) du matériau d'échantillon de matière solide (2) sont enlevées par irradiation avec le rayon laser (7) dans le liquide porteur ;
- évacuation de la suspension de particules (3) du matériau d'échantillon de matière solide (2) et de liquide porteur hors du canal de liquide (10) de la cellule d'ablation (9),
**caractérisé en ce que**
- les signaux de mesure du dispositif de mesure (8) sont quantifiés à l'aide d'un liquide standard qui est introduit, pour l'étalonnage, par l'intermédiaire d'un dispositif de dosage (16) dans la conduite d'alimentation (11) pour le liquide porteur.

14. Procédé selon la revendication 13, en outre **caractérisé par** les étapes suivantes :
- déplacement du matériau d'échantillon de matière solide (2) par rapport au rayon laser (7) dans la direction longitudinale (x) et/ou dans la direction transversale (y) du matériau d'échantillon de matière solide (2) et/ou dans la direction de la hauteur (z) du matériau d'échantillon de matière solide (2) ;
- analyse des particules (3) du matériau d'échantillon de matière solide (2) d'une position x et/ou d'une position y et/ou d'une position z du matériau d'échantillon de matière solide (2) par rapport au rayon laser (7).
